Europäisches Patentamt

(19) European Patent Office

Office européen des brevets

(11) Publication number : **0 281 567 B1**

# (12) EUROPEAN PATENT SPECIFICATION

(45) Date of publication of patent specification :
**02.01.92 Bulletin 92/01**

(51) Int. Cl.⁵ : **B62L 3/02**

(21) Application number : **87900716.9**

(22) Date of filing : **08.11.86**

(86) International application number :
**PCT/EP86/00644**

(87) International publication number :
**WO 87/02957 21.05.87 Gazette 87/11**

(54) **DRIVING MEANS OF A BICYCLE BRAKE, IN PARTICULAR A RACING BICYCLE.**

(30) Priority : **19.11.85 IT 2290385**

(43) Date of publication of application :
**14.09.88 Bulletin 88/37**

(45) Publication of the grant of the patent :
**02.01.92 Bulletin 92/01**

(84) Designated Contracting States :
**AT BE CH DE FR GB IT LI LU NL SE**

(56) References cited :
**GB-A- 800 196**
**US-A- 3 760 648**

(73) Proprietor : **MODOLO ADAMO & C.S.N.C.**
**Via Vanizza 21**
**I-31023 Sarano di S. Lucia di Piave (IT)**

(72) Inventor : **MODOLO, Domenico**
**Via Ippolito Nievo, 1**
**I-31015 Conegliano (IT)**

(74) Representative : **Dr. Ing. A. Racheli & C.**
**Viale San Michele del Carso, 4**
**I-20144 Milano (IT)**

## Description

This invention relates to an operating means for a bicycle brake, in particular for a racing bicycle brake.

The known devices have the disadvantage of obliging the cyclist to carry out a different stroke with each finger; often the little finger, which is the weakest, has to exert the greatest effort. Moreover the free end of the lever is one of the main causes of physical injury during falls. In addition, the levers available on the market at present are scarcely aerodynamic. Their operating mechanisms are often irrational, providing, for instance, narrow curves for the control wire, especially when the cables pass inside the handle-bar tube.

Furthermore, in speed contests, bicycles having a handle-bar that is reversed with respect to the ordinary racing handle-bar are used. This handle-bar is upturned, extending in a straight line that facilitates the hand hold and permits the cyclist to assume a more aerodynamic position. In these cases the problem of operating the brake lever is even more serious. The solutions so far effected are not very efficient; the operating rod has to perform excessively narrow curves and this facilitates breakages and makes substitutions long and difficult.

U.S. patent 3.760.648, which corresponds to the preamble of claim 1, discloses an auxilliary bicycle braking system comprising a first rod that joins together the normal brake levers. This rod is connected by means of two wires to a second rod parallel to the central portion of the handle-bar where it is assumed that the cyclist rests his hands when pedalling in a relaxed position at low speed. This second rod is positioned so that the cyclist can grasp it with his fingers when his hand is resting on the central part of the handle-bar. This system does not permit each brake to be operated separately and especially not at high speed, when the cyclist's hands must be on the outer portions of the handle-bar. Moreover this device is very heavy and cumbersome; it makes operation of each individual brake much more difficult.

The purpose of this invention is that to provide a brake operating device that is more comfortable for the cyclist, more reliable and safe, also permitting simple part replacement as well as an altogether aereodynamic construction.

Another purpose is that of creating a device that can be adapted to handle-bars having upturned ends, as used in speed contests.

The proposed operating means achieve the above mentioned aims by providing a lever hinged in such way as to rotate around an axis substantially parallel to the axis of the handle-bar grip.

A preferred embodiment provides that the brake lever is U shaped and that its ends are hinged on the handle-bar grip.

Another favourable arrangement provides a cavity in the grip for containing the brake operating mechanism.

In the latter case it is preferable to let the grip protrude for a certain distance over the tube forming the structure of the handle-bar, so as to obtain a wide cavity at its ends.

Another favourable arrangement is that of realizing the support of the lever axis with two tabs parallel to the handle-bar grip.

The operating mechanism can be both hydraulic and mechanical, it being possible to change from one arrangement to the other simply by replacing some mechanical parts.

In particular, the driving mechanism can consist of a pivot joint and a rockerarm that move a small hydraulic piston or alternatively the tie rod of a flexible wire control.

The invention will now be better explained with an exemplary embodiment shown in the enclosed drawings, in which:

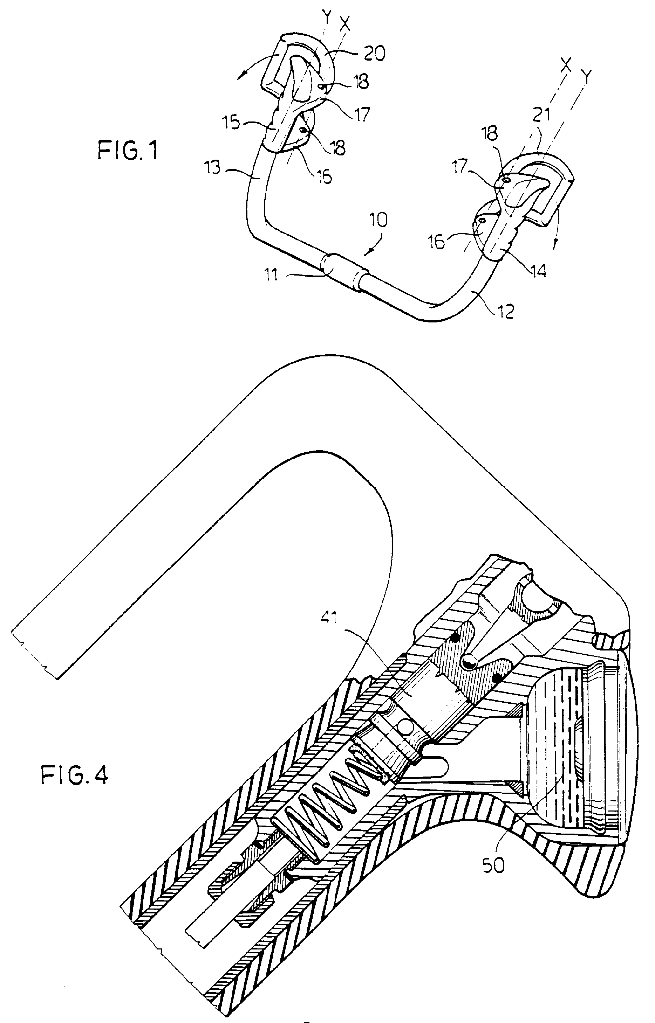

figure 1 is a perspective view of the whole handle-bar on which the proposed device is mounted.

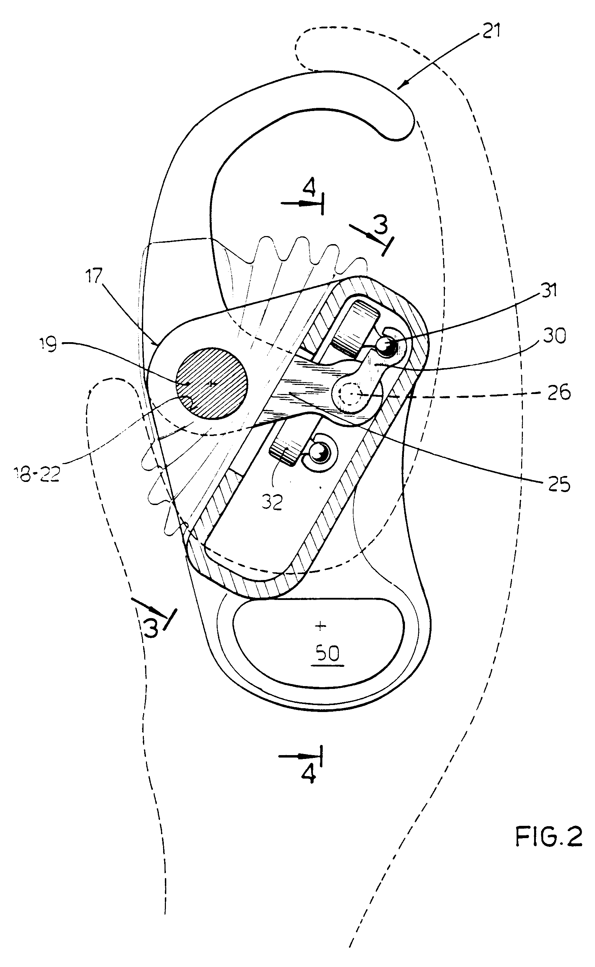

Figure 2 is a partially sectioned top view of a handle-bar including the proposed device, also indicating the position of the cyclist's hand;

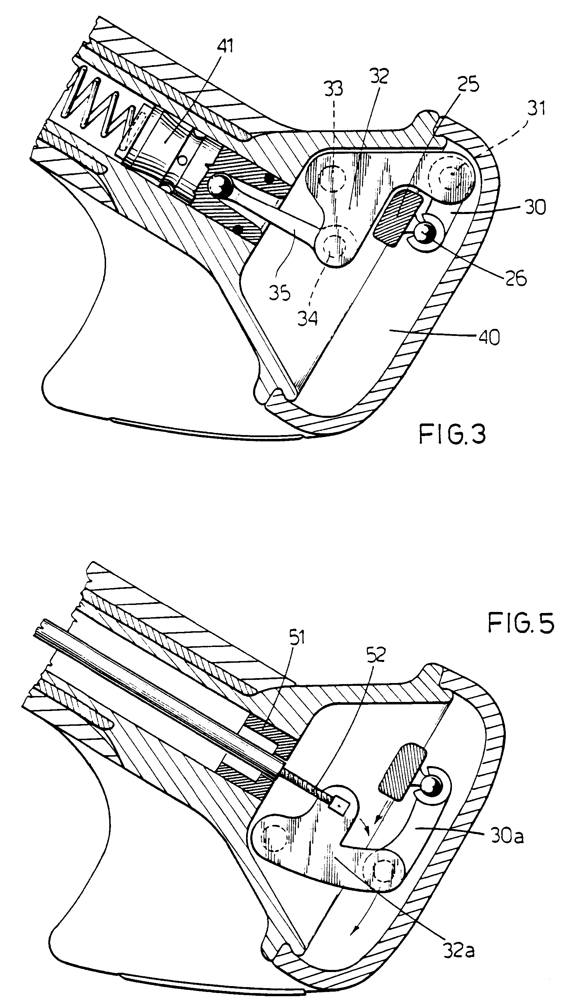

figure 3 is a view of section 3-3 in figure 2;

figure 4 is a view of section 4-4 in picture 2;

figure 5 is a schematic view of a variant of the operating mechanism.

From the drawings it can be noticed that the handle-bar 10 has a middle portion for insertion in the bicycle's lug and two up-turned ends 12 and 13 that stretch out towards the front and upper side. At these ends handle-bar grips 14 and 15 are foreseen each one including a wide cavity 40 and two lateral tabs 16 and 17. Each of these provides a seat 18 in which a bolt 19 is inserted that allows rotation of levers 20 and 21 around an axis X parallel to the axis Y of handle-bar grips 14 or 15. The latter are U shaped and their ends are provided with a seat 22 for bolt 19 and with a nub 25. This nub 25 is provided with a spherical head 26 on which is engaged an end of the pivot joint 30 whose other end is engaged in another spherical head 31 fast with an arm of an L-shaped rockerarm 32.

The rockerarm 32 is hinged in a fixed point 33 provided inside the grip in cavity 40. As shown in the drawings all the mechanisms are contained in said cavity. In particular the rockerarm 32 has another arm that presses with its end 34 on bar 35 that drives a small hydraulic cylinder 41 to move the brake shoes (not shown) holding the braking pads. The hydraulic cylinder 41 is progressively fed by reservoir 50 provided at the highest part of the grip, on the enlarged portion that acts as anatomical safety end of the handle-bar.

It is also possible to foresee a wire driving mechanism of the kind shown in figure 5. In this case the nub 25 will receive the end of a pivot joint 30a similar to pivot 30 and this will be connected to a rockerarm 32a that instead of cylinder 41 will move the wire 52 of a flexible wire drive 51 in a similar way.

## Claims

1. Operating means for a bicycle brake comprising a lever (20, 21) hinged at a handle-bar grip (14, 15) and a means for transferring the movement of such lever (20, 21) to the brake shoes carrying the braking pads, characterized in that the lever (20, 21) is hinged for rotation around an axis (X) substantially parallel to the axis (Y) of the handlebar grip (14, 15).

2. Operating means as in claim 1, characterized in that the brake lever (20, 21) is-U shaped and has its two ends hinged at the handle-bar grip (14, 15).

3. Operating means as in claim 1 or 2, characterized by providing a cavity (40) in the handle-bar grip (14, 15) that is able to receive the brake mechanism.

4. Operating means as in claim 3, characterized by the handle-bar grip (14, 15) protruding for a certain distance over the tube forming the structure of the handle, so as to obtain at its ends a wide cavity (40)

5. Operating means as in any of the previous claims, characterized in that the support of the lever axis consists of two tabs (16, 17) fast with the handle-bar grip (14, 15).

6. Operating means as in any of the previous claims, characterized by a hydraulic driving mechanism.

7. Operating means as in any of the previous claims, characterized by a wire driving mechanism.

8. Operating means as in claims 6 or 7, characterized in that the mechanism consists of a pivot joint (30, 30a) and rockerarm (32, 32a) that moves a small hydraulic piston (41) or alternatively a wire (52) of a flexible wire drive, that is to say the transmission means to the brake shoes.

## Patentansprüche

1. Fahrradbremssteuervorrichtung mit einem am Handgriff (14, 15) der Lenkstange angelenkten Hebel (20, 21) und einem Mittel, um die Bewegung des Hebels (20, 21) den den Bremsbelag tragenden Backen zu übertragen, dadurch gekennzeichnet, daß der Hebel (20, 21) in der Weise angelenkt ist, damit er sich um eine zur Achse (Y) des Griffes (14, 15) der Lenkstange im wesentlichen gleichen parallelen Achse (X) drehen kann.

2. Steuervorrichtung nach Anspruch 1, dadurch gekennzeichnet, daß der Bremshebel (20, 21) U-förmig verwirklicht ist und seine beiden Enden am Griff (14, 15) der Lenkstange angelenkt sind.

3. Steuervorrichtung nach Anspruch 1 oder 2, dadurch gekennzeichnet, daß eine Vertiefung (40) im Griff (14, 15) der Lenkstange vorgesehen ist, die zur Aufnahme der Bremsvorrichtung geeignet ist.

4. Steuervorrichtung nach Anspruch 3, dadurch gekennzeichnet, daß der Griff (14, 15) der Lenkstange ein Stück über das die Struktur der Lenkstange formende Rohr ragt, um an dessen Enden eine geräumige Vertiefung (40) zu erhalten.

5. Steuervorrichtung nach einem der vorstehenden Ansprüche, dadurch gekennzeichnet, daß das Lager der Hebelachse aus zwei am Griff (14, 15) der Lenkstange befestigten Nasen (16, 17) gebildet ist.

6. Steuervorrichtung nach einem der vorstehenden Ansprüche, dadurch gekennzeichnet, daß der Mechanismus der Steuerung hydraulisch ist.

7. Steuervorrichtung nach einem der vorstehenden Ansprüche, dadurch gekennzeichnet, daß der Steuermechanismus aus Draht besteht.

8. Steuervorrichtung nach Anspruch 6 oder 7, dadurch gekennzeichnet, daß der Mechanismus aus einer Gelenkverbindung (30, 30a) und einem Kipphebel (32, 32a) besteht, der den hydraulischen Kolben (41) oder das Zugglied (52) einer biegsamen Drahtsteuerung als Ubertragungsmittel zu den Backen betätigt.

## Revendications

1. Moyen d'actionnement d'un frein de bicyclette comprenant un levier (20, 21) pivotant sur la poignée (14, 15) du guidon, et un moyen pour reporter le mouvement dudit levier (20, 21) aux mâchoires portant les patins freinants, caractérisé en ce que le levier (20, 21) pivote de telle sorte qu'il tourne autour d'un axe (X) pratiquement parallèle à l'axe (Y) de la poignée (14, 15) du guidon.

2. Moyen d'actionnement selon la revendication 1, caractérisé en ce que le levier du frein (20, 21) est réalisé en forme de U et que ses deux extrémités pivotent sur la poignée (14, 15) du guidon.

3. Moyen d'actionnement selon la revendication 1 ou 2, caractérisé en ce qu'il prévoit une cavité (40) dans la poignée (14, 15) du guidon, qui est à même de contenir le mécanisme du frein.

4. Moyen d'actionnement selon la revendication 3, caractérisé en ce que la poignée (14, 15) du guidon dépasse sur une certaine longueur le tube formant la structure du guidon, de façon à obtenir aux extrémités de celle-ci une vaste cavité (40).

5. Moyen d'actionnement selon n'importe laquelle des revendications précédentes, caractérisé en ce que le support de l'axe du levier se compose de deux oreilles (16, 17) solidaires de la poignée (14, 15) du guidon.

6. Moyen d'actionnement selon n'importe laquelle des revendications précédentes, caractérisé en ce que le mécanisme d'actionnement est hydraulique.

7. Moyen d'actionnement selon n'importe laquelle des revendications précédentes, caractérisé en ce que le mécanisme d'actionnement est à fil.

8. Moyen d'actionnement selon les revendications 6 ou 7, caractérisé en ce que le mécanisme se compose d'une connexion articulée (30, 30a), et d'un balancier (32, 32a), qui actionne un petit piston hydraulique (41) à savoir le tirant (52) d'une commande à fil flexible, c'est-à-dire le moyen de transmission aux mâchoires.

FIG.1

FIG.4

FIG.2

EP 0 281 567 B1

6

FIG.3

FIG.5